Europäisches Patentamt

European Patent Office

Office européen des brevets

(19)

(11) Publication number: **0 205 175**
A2

(12) # EUROPEAN PATENT APPLICATION

(21) Application number: **86108009.1**

(22) Date of filing: **12.06.86**

(51) Int. Cl.⁴: **B 25 J 19/02**
**B 25 J 13/08**

(30) Priority: **14.06.85 SE 8502962**

(43) Date of publication of application:
**17.12.86 Bulletin 86/51**

(84) Designated Contracting States:
**DE FR GB IT**

(71) Applicant: **ASEA AB**

**S-721 83 Västeras(SE)**

(72) Inventor: **Bäck, Stefan**
**Linnégatan 10**
**S-722 15 Västeras(SE)**

(72) Inventor: **Gardstam, Bertil**
**Bessemergatan 131**
**S-724 74 Västeras(SE)**

(72) Inventor: **Karlsten, Peter**
**Labradorvägen 29**
**S-722 43 Västeras(SE)**

(72) Inventor: **Svensson, Ronnie**
**Blaklockevägen 65**
**S-722 43 Västeras(SE)**

(74) Representative: **Boecker, Joachim, Dr.-Ing.**
**Rathenauplatz 2-8**
**D-6000 Frankfurt a.M. 1(DE)**

(54) **Method and device for determining the position of an object in connection with robot equipment.**

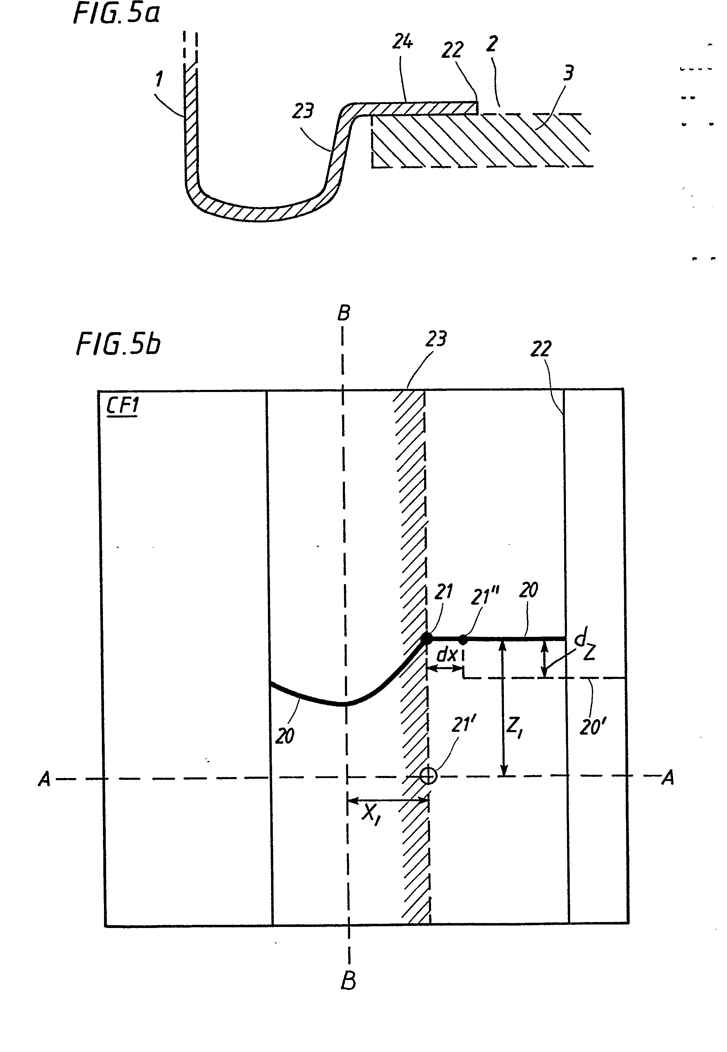

(57) Method and device for determining the position of an object in connection with robot equipment, whereby at least one camera support by the robot is used. The camera provides a two-dimensional image of a region (CF1) of the surface of the object. On the basis of a light source mechanically connected to the camera, a line (20) or a different pattern is projected on the surface of the object, the emitted light making a fixed angle with the optical axis of the camera. On the basis of the position in the image of the projected line (20) in a first direction (B-B), a measure $(z_1)$ is calculated of the distance of the object from the camera. On the basis of the position in the image in a second direction of a distortion (21) of the projected line, which is caused by a characteristic part of the object, a measure $(x_1)$ is calculated of the position of said characteristic part (Figure 5b).

FIG.5b

0205175
21 741 PE

ASEA AB
S-721 83 Västeras/Sweden

Method and device for determining the position of an object
in connection with robot equipment

The invention relates to a method and a device for determining the position of an object in connection with robot equipment.

The invention is intended to be applied, for example, to robot equipment in which an industrial robot is arranged to carry out a work operation on an object. Such a work operation may consist, for example, in the installation of a part on the object, machining of the object by means of a tool supported by the robot, laying out glue strands, painting, etc. When programming a robot for carrying out such a work operation, the robot is consecutively guided by hand to a number of points on the path to be traversed. For each point, the position of the point and any additional instructions, for example instructions for carrying out a work operation at the point, are stored in the memory of the robot. During automatic running of the robot, the robot will travel along the path defined by the stored points and carry out, at the desired points, the programmed work operations. The programming is often performed by means of an object of the kind on which the work operations are later to be carried out by automatic operation, which object is arranged adjacent the robot. In operation of the robot, both the position and the dimensions of the object will unavoidably deviate from the position and dimensions of the object used for the programming. These deviations will cause the position, in relation to the object, of the path traversed by the robot to deviate from the desired position. The demands for tolerances for the work operation to be carried out are often of such a magnitude that the above-mentioned deviations in position and dimension of the object will render a correct performance of the work operation entirely impossible. Therefore, it is desirable to employ some form of sensor or transducer for locating the position of the object or of that part of the object at which the work operation is to be carried out.

The concept "determination of position" in the following description refers to the determination of as many variables as are needed in each particular case to define the position in space of the object or the part of the object relevant to the work operation. The concept "position" can thus cover up to six coordinates and can also comprise the concept "orientation", that is, the angle of rotation around 1 to 3 axes.

In order to determine in robot equipment the position of an object, it is known to arrange position sensors which are fixed in relation to the robot base plate. Such sensors must in general have a large measuring range and have therefore normally low accuracy. Such sensors must also often be arranged to measure on a section of the object different from that on which the work operation in question is to be carried out. In this case, the dimensional deviations of the object will give rise to inaccuracies which often exceed acceptable tolerance limits.

Further, it is known, for example from the ASEA Pamphlet CK 09-1207S, to arrange distance sensors in the immediate vicinity of a work tool, for example a welding tool, supported by the robot. Such sensors work with high accuracy but generally have a small measuring range and must therefore be positioned accurately, which may take long time, particularly if the possible positional deviations of the object are considerable. Further, such a sensor only gives a determination of the position of the object in one single degree of freedom - the distance - and for a position determination in more than one degree of freedom, slow and time-consuming scanning methods are required.

The invention aims at developing a method of the above-mentioned kind which allows to make a rapid and accurate determination of the position in at least two degrees of freedom by means of one single sensor.

To achieve this aim the invention suggests a method for determining the position of an object according to the introductory part of claim 1, which is characterized by the features of the characterizing part of claim 1.

Further developments of the method according to the invention are characterized by the features of the additional claims 2 to 13.

A device for carrying out the method according to the invention is characterized by the features of claim 14.

Further developments of this device according to the invention are characterized by the features of the additional claims 15 and 16.

According to one embodiment of the invention, the projected pattern consists of a line, for example a straight line, whereby the first-mentioned direction is substantially perpendicular to the line and the last-mentioned direction is substantially parallel to the line. For the position determination, a distortion of the projected line, caused by the characteristic part of the object, can be utilized. The distortion may suitably consist of a break point or corner in the image of the line. Alternatively, the characteristic part can consist of a borderline between two regions having different luminance. For determining the orientation of the object, according to the invention a plurality of determinations can be made at different points of the object. In robot equipment used for installation of a part of the object, according to a preferred embodiment of the invention the robot is first guided to a collect position for collecting the part, and then to a measuring position. In the measuring position a determination of the position of the object is made and based thereon a calculation is made of the position to be assumed by the robot in order to accurately position the part on the object. Thereupon the robot is guided to the last-mentioned position.

According to a preferred embodiment, the camera or cameras are connected to a work tool fixed to the robot hand. To enable rapid determination of the position in a large number of degrees of freedom, the measuring members according to a preferred embodiment comprise a plurality of cameras supported by the robot, these cameras being arranged to determine the position of a plurality of points on the object which are separated from each other.

By means of the method and a device according to the invention, a rapid, direct and accurate position determination in at least two dimensions can be obtained with the aid of one single sensor, without the need of time-consuming scanning movements. A considerable shortening of the work cycle of a robot can thus be achieved, and these advantages are especially great in the case of work operations involving high tolerance requirements and in which considerable positional or dimensional deviations occur between the objects on which the work operations are to be carried out.

When using a plurality of cameras according to the invention, which are arranged for simultaneous measurement at different points on the object, a complete determination of the position of that part of the object which is relevant to the work operation can be carried out very rapidly.

The invention will now be described in greater detail with reference to the accompanying drawings. They refer - by way of example - to robot equipment employed for the installation of a rear window and a door, respectively, of a passenger car body and show in

Figure 1 a work station for installing a rear window, seen from above;

Figure 2 a car body seen from behind and the points for the four cameras included in the equipment;

Figure 3 the robot hand in its measuring position;

Figure 4 the principle of position determination according to the invention;

Figure 5a and 5b an example of the image generated by a camera;

Figure 6 a block diagram of measuring and control equipment used in the embodiment;

Figure 7 the principle of the transformation of the position information from the camera to a common reference system;

Figure 8, in principle, a flow diagram for the work of the control system during a work operation;

Figure 9 the measuring points in the case of the installation of a door ;

Figure 10a and 10b a corresponding example of the image generated by a camera;

Figure 11 the determination of the gap between the door and
the car body.

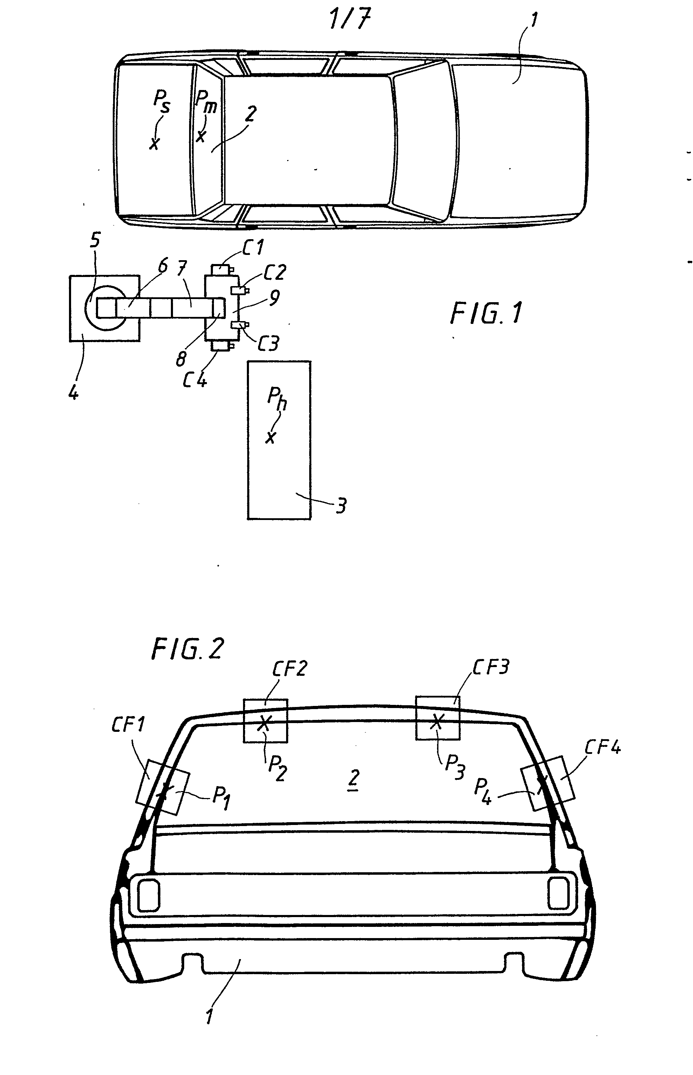

Figure 1 shows a work station for installation of rear win-
dows 3 on the body 1 of a passenger car. The car body may
arrive at the station on, for example, an assembly line or a
so-called auto-carrier. The rear window is to be installed
in the opening 2 provided for that purpose in the car body.
During the installation, a window 3 is collected from a
storage where the windows are arranged with their positions
and orientations accurately determined by some fixture device not shown. An industrial robot 4-8 is placed in the
work station near the rear right-hand part of the car body.
The robot has a base plate 4, a rotatable column 5, an upper
arm 6, a forarm 7 and a wrist 8. The robot may, for example,
be of the type - IRB 60/2 - which is described in the ASEA
Pamphlet CK 09-1102E. The robot is preferably of six-axis
design to have full freedom when adjusting the position and
orientation of the rear window during installation. The
wrist of the robot supports a work tool in the form of a
frame 9. Four video cameras C1-C4 are fixedly attached to
the frame. Further, the frame is provided with suction cups
for securing a rear window. When programming the robot, the
robot is run, in a known manner, in sequential order to a
plurality of points defining the desired path, whereby at
each point additional instructions can be stored, for example for activation and deactivation of the suction cups, for
initiation of measurement and calculation operation, etc.
During automatic operation, the robot travels through the
programmed path and carries out the programmed instructions
at the points in question.

On its arrival at the collect position shown in the figure, a rear window 3 is coated with glue along its edges.

Figure 2 shows the car body seen from behind, with the window opening 2 and four measuring points $P_1-P_4$ at the edge of the opening. Figure 2 also shows the sight fields CF1-CF4 of the cameras C1-C4 when the robot and the cameras are in their measuring position. As will be clear from Figure 2, the measuring points are located at parts of the opening 2 which are relatively straight. As will be clear from the following description, there is further determined, at each measuring point, the position of the edge of the window opening in a direction substantially perpendicular to the edge. In this way, greater accuracy in the determination of the position is obtained than if the measuring points were to be located, for example, in the corners of the window opening. Furthermore, the determined position is not changed by displacement of the measuring point along the edge, or is changed only to an insignificant extent, which simplifies the calculations of the corrections to the installation position $P_m$ and increases the accuracy.

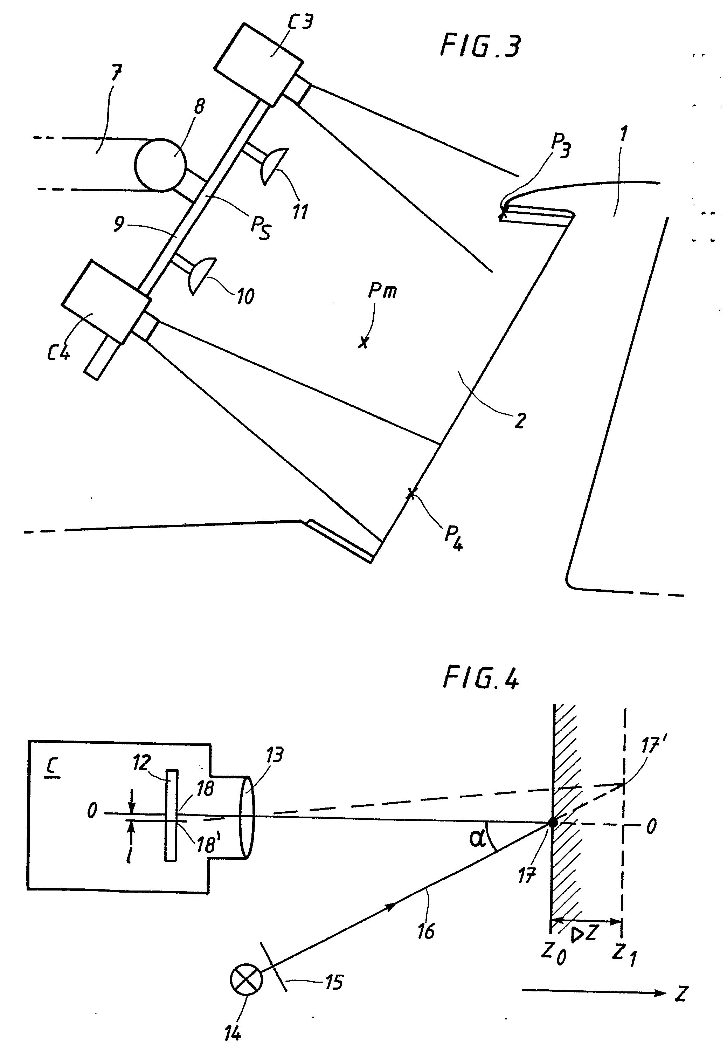

Figure 3 shows the car body 1 and the opening 2 seen from the right-hand side of the car body. Only the forearm 7 and the wrist 8 of the robot are shown in Figure 3. The robot, the frame 9 and the cameras, only two of them C3 and C4 are shown in the figure, are in their pre-programmed measuring position, which is defined by the centre of the frame 9 being situated at point $P_S$ and by the frame assuming the pre-programmed orientation shown in the figure. Figure 3 also shows two (10 and 11) of the suction cups that are used for securing the rear window during installation.

Figure 4 shows the principle of the determination of the distance of an object from the camera. The camera C has in its image plane a two-dimensional sensor 12 which may be of a so-called CCD-type. A light source 14 is arranged to project on the surface of the object, with the aid of a slit plate 15, a narrow light line 17, the extension of which in the figure is perpendicular to the plane of the paper. The light 16 emitted from the light source through the slit in the slit plate 15 makes a fixed angle $\alpha$ with the optical axis O-O of the camera. When the surface of the object is at a nominal distance from the camera, which is the case in Figure 4 when the car body is in the position $z_0$, the projected line assumes the position 17 shown in the figure. The object lens 13 of the camera then generates an image 18 of the line 17 and the image 18 is situated on the optical axis of the camera. If the surface of the object is in a position $z_1$ which deviates from the nominal position $z_0$, the projected line assumes the position 17' shown in the figure and the image of the line assumes the position 18' on the sensor 12. The distance 1 of the image 18' from the nominal position 18 is directly proportional to the deviation $\Delta z$ from the nominal position $z_0$. The proportionality constant between 1 and $\Delta z$ is obtained by a simple geometric calculation. Thus, by determining 1 from the camera image, the distance of the object in relation to the nominal position $z_0$ is obtained directly.

Figure 5a shows a section in a plane, perpendicular to the rear window 3, through that part of the car body which is in the sight field of the camera C1. Figure 5a also shows in dashed lines the rear window 3 in its as-installed position. The edge of the car body sheet facing the window opening 2 is designated 22. Adjacent the window opening 2 the sheet has a plane part 24 against which the window 3 is glued. The part 24 is recessed in relation to the surrounding part of the car body and is joined to this part with the aid of a transition part 23 surrounding the window opening.

Figure 5b shows the sight field CF1 of the camera C1 and the image generated by the camera. The light source 14 and the slit plate 15 are suitably arranged so that the projected line is approximately perpendicular to the edge 22 of the window opening. Further, the camera is arranged so that its optical axis is substantially perpendicular to the plane of the window 3. Owing to the inclined direction of projection of the light, the projected line on the image will have the appearance shown by means of the line 20. The line thus consists of a straight part in the right-hand part of the figure, which part at point 21 changes into the curved part in the left-hand part of the figure. The dashed line A-A in the figure designates the position assumed by the right-hand straight part of the line 20 when the surface of the object is at the nominal distance $z_O$ (see Figure 4) from the camera. As has been described above with reference to Figure 4, the distance between the right-hand straight part of the line 20 and the reference line A-A constitutes a measure of the distance $z_1$ from the camera of the plane part 24 against which the window 3 is applied during installation.

At point 21 in the image the line 20 has a break or a so-called corner, that is, an abrupt change of inclination. The position of such a break in a camera image can be simply determined with the aid of image processing methods which are well known per se. The reference line B-B, which is approximately parallel to the sheet edge 22, denotes the position of the break 21 when the transition between the car body parts 23 and 24 has its nominal value, that is, the position used during programming of the robot and calibration of the measuring equipment. The distance between point 21 and line B-B is a direct measure of the displacement of the window opening in relation to the nominal position in a direction parallel to the reference line A-A. The distance is suitably determined by projecting the point 21 - when the position of the point has been determined - down towards the reference line A-A - point 21'- whereupon the distance $x_1$ of the latter point from the line B-B is determined.

As will be clear from the above description, a measure of the position of the car body in two degrees of freedom is obtained directly from the camera image - in the distance direction as well as in a direction substantially perpendicular to the optical axis of the camera.

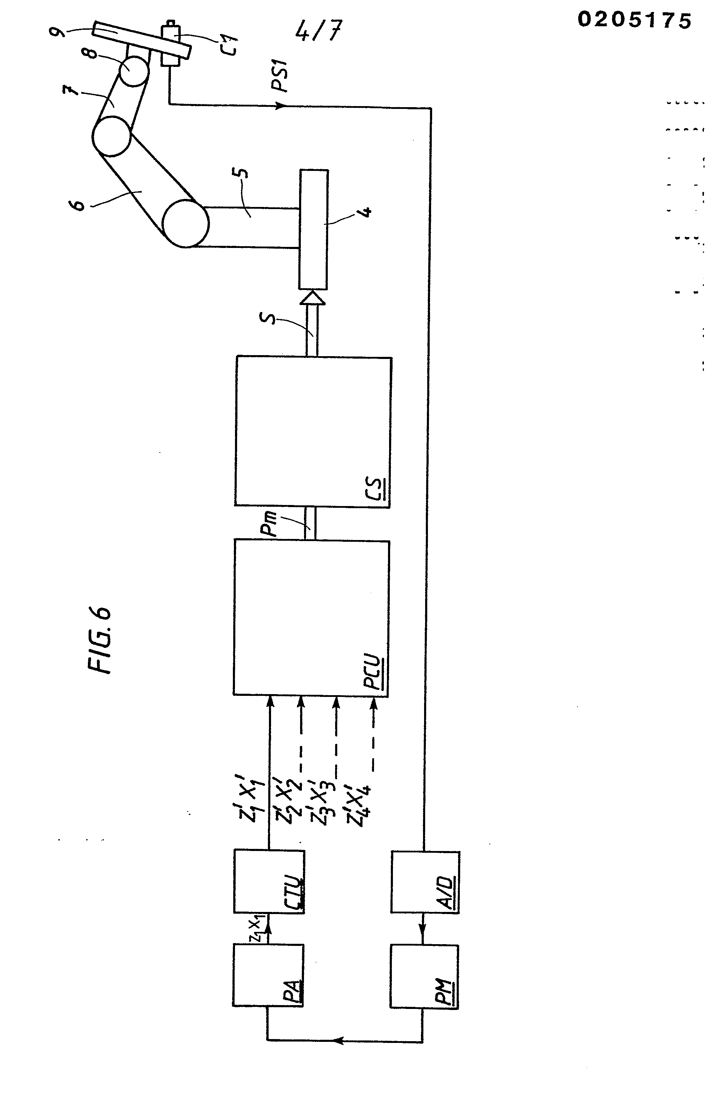

Figure 6 shows the industrial robot 4-8 with the schematically shown frame 9 and one - C1 - of the four cameras mounted on the frame. When the robot has assumed its measuring position, designated PS in Figure 2, the camera sensor 12 is read picture element by picture element in a manner known per se. The image signal PS1 obtained from the camera thus consists of a sequence of analog signals, which each constitutes a measure of the light level of a picture element in the camera image. The image signal PS1 is supplied to an A/D converter in which the analog signals with the desired resolution are converted into digital signals and stored in a refresh memory PM which has one memory cell per picture element. The image is thereafter stored in the refresh memory and can be read out to an image analyzer PA, consisting of a digital calculating unit. This unit emphasizes the contours in the image by filtering the image by means of an edge-detecting operator, which, for example, is of the so-called sobel operator type. The contours formed are traced and described with a so-called chain code. By filtering and differentiating this code, breaks of the contours can be located, that is, their positions in the image plane are determined. In a manner known per se, the image analyzer PA may, for example, work according to the principles disclosed in the following publications:

W K Pratt:   "Digital Image Processing", Wiley, New York, 1978 (especially pp. 486-491)

H Freeman:        "Computer Processing of Line Drawing Images", ACM Computing Surveys 6(1), 57-97 (1974)

H Freeman:        "Shape Description Via the Use of Critical Points", Pattern Recognition, Vol. 10 (pp. 159-166)

K R Castleman: "Digital Image Processing", Prentice Hall, Englewood Cliffs, NJ, 1979 (e.g. pp. 316-329).

In a manner known from the above publications, signals $z_1$ and $x_1$ are obtained from the image analyzer PA, which denote the position of the car body in two degrees of freedom (see Fig. 5b) determined at point $P_1$ (see Fig. 2). These signals are supplied to a coordinate transformation unit CTU, in which the position sensed by the camera C1 is converted into a system of coordinates common to the cameras, for example a system of coordinates fixed to the wrist of the robot and hence to the frame 9. The coordinates $z_1'$ and $x_1'$ thus transformed are supplied to a calculating unit PCU. These coordinates constitute deviations in position of the window opening 2 of the car body in question from the positions present during the programming of the robot. The calculating unit is arranged to correct, according to known geometric relationships, the programmed coordinates for the installation position - point $P_m$ in Figure 3 - in such a way that the window 3, when the robot is in the installation position thus corrected, assumes the correct position in relation to the window opening 2 of the car body in question.

Figure 6 describes the image processing for one of the cameras only. The other cameras C2-C4 may each have signal processing circuits A/D to CTU designed in the same way as the circuits shown in Figure 6 for camera C1. Alternatively, the signal processing circuits may completely or partially be common to all or a number of the cameras. Figure 6 shows only schematically how the position signals from the other three cameras are supplied to the calculating unit PCU. The corrected coordinates for the point $P_m$, calculated in unit PCU, are supplied to the control system CS of the robot in the form of digital desired values, and the control system delivers such control signals s to the servos of the robot that the robot is guided to point $P_m$.

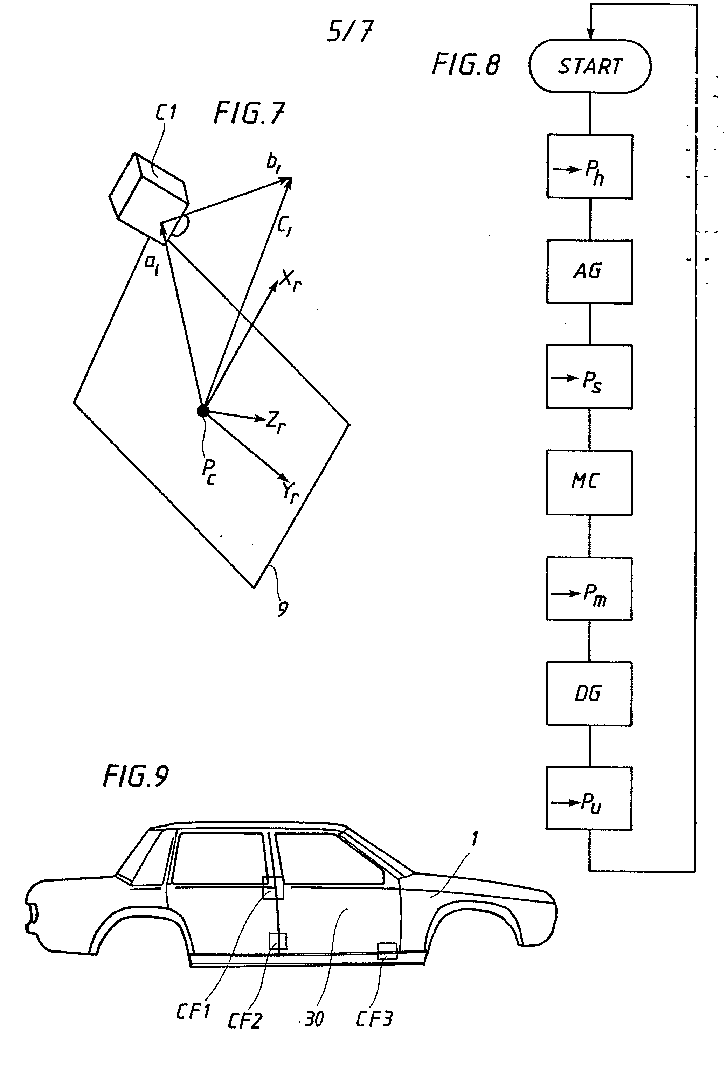

Figure 7 shows how the position signals from the camera C1 are transformed into a coordinate system $x_r$, $y_r$, $z_r$, oriented to the wrist of the robot and to the frame 9 fixed to said wrist, with the origin of its coordinates at the centre $P_c$ of the frame 9. The position of the camera C1 in relation to said coordinate system is fixed and known and designated by the vector $a_1$. The orientation of the camera is known and, together with the position signals sensed by the camera, determines the vector $b_1$ which indicates the position in relation to the camera which is sensed by the camera. The sum of these two vectors constitutes the vector $c_1$, which in the above-mentioned system of coordinates indicates the deviation in position sensed by the camera. This vector can thus be calculated according to known geometric relationships. In a corresponding way the coordinate transformation for the other three cameras is made.

Figure 8 shows a fundamental flow diagram for the robot equipment and the installation method described above. The process is started, for example, by a sensor (not shown) sensing the arrival of a car body at the work station. The robot is guided by its control means to point $P_h$ (see Figure 1), and on arrival at this point the suction cups mounted on the frame 9 are activated - block AG - to seize a window 3. Thereafter the robot is guided into the measuring position $P_s$ (see e.g. Figure 3), and on arrival in this position, the above-mentioned measuring and calculating process for determining the coordinates of point $P_m$, corrected for the car body in question, is started - block MC. When this process is completed, the robot is guided into the installation position $P_m$, and when having reached this position, the window 3 lies pressed against the installation edge 24 with a suitable pressure, for example determined by the spring members of the suction cups. Thereafter, the suction cups are deactivated - block DG - and the robot is guided back to an initial position $P_u$, for example the position shown in Figure 1.

An alternative embodiment of the invention will now be described with reference to Figures 9-11 and relates to the application of the invention to equipment for installing a front door on a passenger car body by means of an industrial robot.

Figure 9 shows the car body 1 on which the door 30 is to be mounted. The door is collected by a robot in a corresponding manner as described above. The robot carries a work tool of the same design as that described above but with three cameras mounted on the frame 9 instead of four. The door 30 is brought to a predetermined measuring position $P_S$ which is chosen such that the door is at least partially inserted into the door opening. The image surfaces of the cameras are designated CF1, CF2, CF3, two of them being located at the rear edge of the door and one at the front part of the lower edge of the door.

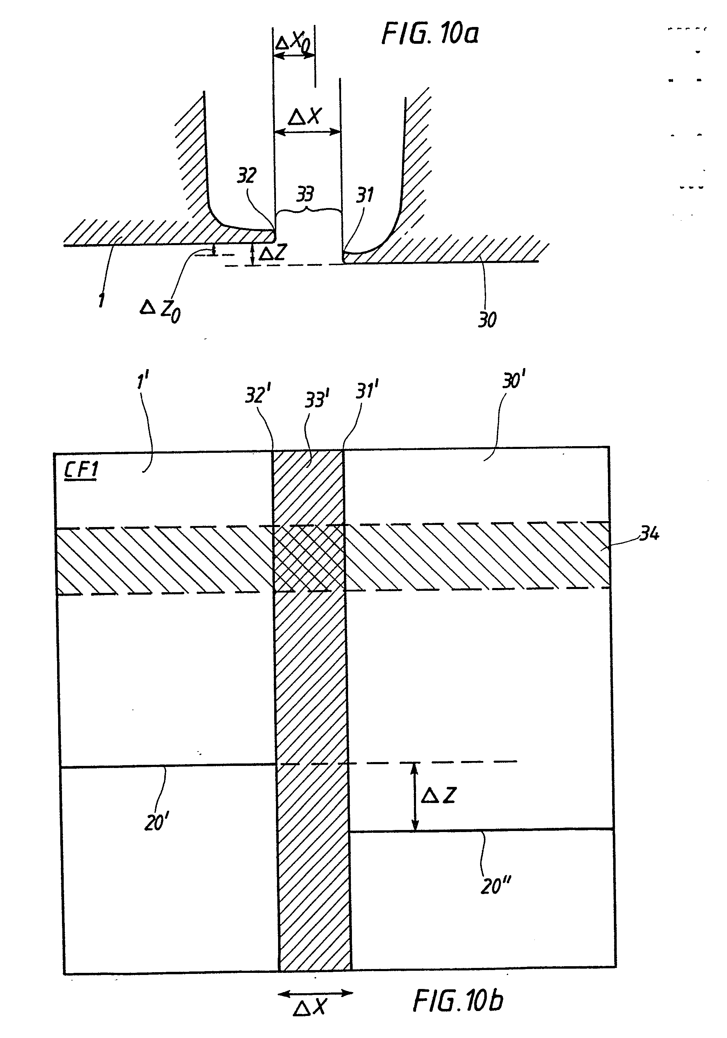

Figure 10a is a part of a section through the car body 1 showing the front part of the rear door and the door 30 within the image range CF1 of the camera C1, the robot with the door 30 being in the measuring position. The front edge of the rear door is designated 32 and the rear edge of the front door 31. The edge of the front door is shown located at the distance $\Delta z$ outside the edge of the rear door, and the gap 33 between the doors has the width $\Delta x$. Owing to dimensional and positional deviations, $\Delta x$ and $\Delta z$ normally deviate from the desired values $\Delta z_0$ and $\Delta x_0$.

Figure 10b shows the image of the camera C1 with the surface 30' of the door 30, the surface 1' of the rear door of car body 1 and the boundaries 31' and 32' between the doors and the darker image 33' of the gap 33. Owing to the difference in height between the surfaces, the images 20' and 20" of the projected line 20 will be displaced from each other at a distance which corresponds to $\Delta z$ and which, in the manner described above, provides a measure of $\Delta z$ (Figure 4 with associated description).

Figure 10b further shows a scanning range 34, and within this range the distance in the image between the boundaries 31' and 32' is determined, which provides a measure of the width $\Delta x$ of the gap 33.

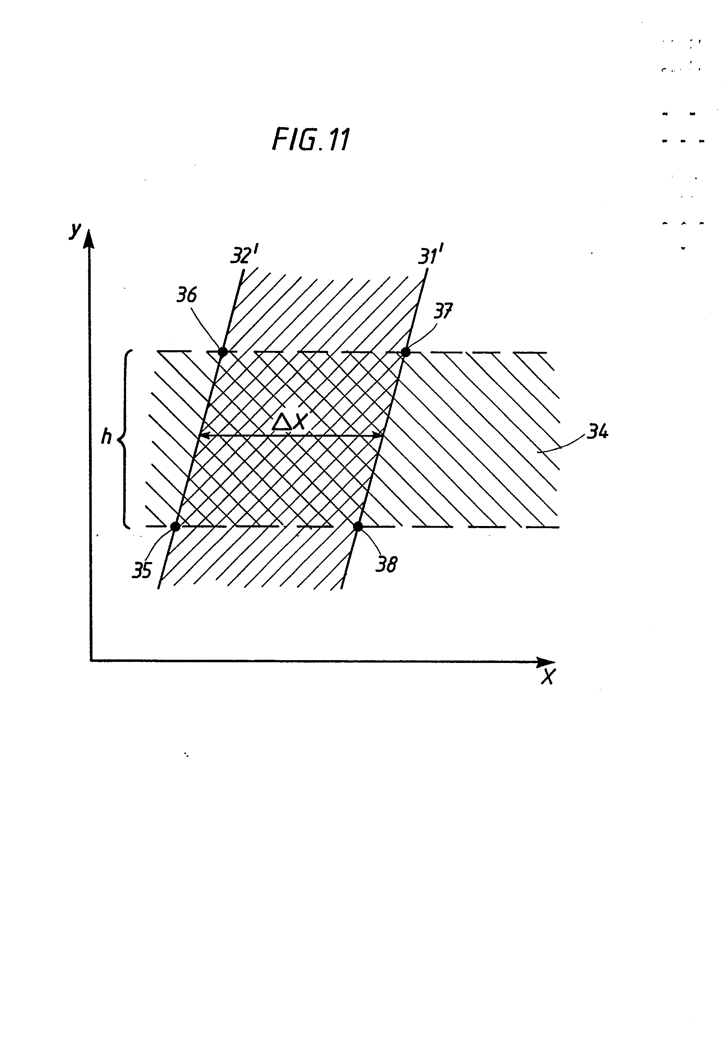

The determination of the width can suitably be made according to Figure 11, which shows part of the scanning range 34, which has the width h, and the boundaries or contours 31' and 32'. The boundaries of the scanning range are predetermined and known, and the boundaries 31', 32' are obtained in a known manner by image analysis. These four lines define a rhomboid with the corners 35-38. The surface of this rhomboid is determined by integration, and from the value of the surface thus determined and the known width h of the scanning range, the gap width $\Delta x$ is obtained from known geometrical relationships. This method results in a more accurate and more reliable determination of the width of the gap than if the measurement is performed at one single point.

At each measuring point the determined values of $\Delta z$ and $\Delta x$ are compared with the desired values $\Delta z_0$ and $\Delta x_0$ at the point. On the basis of the deviations thus obtained, the correction for the installation position $P_m$, which is required for giving the door its correct position in relation to the car body, is thereafter calculated. The robot is guided into the corrected position $P_m$, and the door is at-

tached to the car body by screw drivers (not shown) the screws of the door hinges to the car body.

The determination of the relative position, described above in connection with the door installation, gives the advantage that the demands for accuracy as to the position of the door in relation to the gripping tool of the robot can be set considerably lower.

The above description describes the method according to the invention and equipment for it to be carried out applied to the installation of a window or a door in a passenger car body. However, the invention can, of course, be applied generally to the installation of arbitrary parts on arbitrary objects. As mentioned in the introductory part, a large number of alternative applications of the invention can be considered. It is also possible to use the method described for position determination only, whereby the position determination can be utilized for any arbitrary purpose and does not have to be followed by a work operation executed by the robot. The above-described embodiment of a camera used in connection with the invention is also an example only, and other types of cameras may just as well be used.

With reference to Figures 1-8, a description has been made of how the position determination according to the invention is used for determining an absolute position of the sensed points in a system of coordinates fixed to a robot. Alternatively, the method according to the invention can be used for determining the relative position of two objects in the manner described with reference to Figures 9-11. As an additional example of the determination of a relative position, the window 3 is assumed to adopt the position shown in Figure 5a for the measurement. In the camera image, the right-hand part of the line 20 will then assume the appearance shown in dashed line 20' in Figure 5b. The distance $d_z$ between the lines 20 and 20' can then be sensed and is a measure of the difference in height between the sheet 24 and the outer surface of the window 3. In the same way as described above, a break 21" occurs in the image of the projected line, and the distance between the breaks points 21" and 21 is a measure of the deviation in position in the lateral direction between the edge of the rear window 3 and the edge formed at the junction point between the sections 23 and 24 of the window opening. The characteristic part of the object, which in the example described above provides a distortion of the projected line or pattern, is there a "difference in height" of the surface of the object. Alternatively, other characteristic parts may be considered, for example an edge on the object or the edge of a hole in the object, or an edge line between two regions with different reflectivity. Depending on the appearance of the object in question, the distortion of the projected line need not always occur as a break but may also manifest itself as an interruption in the projected line (pattern) or an intersectional line between the projected line and another line.

In the example, described above, the projected pattern consists of a line, that is, a narrow illuminated band. However, the projected pattern may have other appearances. For example, the light source may be of such a design as to illuminate half the field of sight of the camera and leave the other half unilluminated, the borderline between the illuminated and the unilluminated regions being used for position determination. Alternatively, for example, the pattern may consist of a crescent-shaped figure, a lattice pattern or the like.

As will be clear from Figure 5b, the edge 23 running around the window opening will exhibit a lower luminance than adjacent parts of the image. By determining the position in the image of the right-hand borderline of this darker band in

21 741 PE
0205175

the manner described above, the position $x_1$ of the corner between the parts 23 and 24 can be determined in an alternative manner.

The two variants of the invention described above can be combined, for example during installation of a passenger car door, in such a way that a first determination is made of the position of the door opening in the manner described in connection with the installation of the rear window. This results in a location of the door opening which permits great deviations in the position of the car body. Thereafter, the door installation is performed in the manner described above involving the insertion of the door into the door opening, measurement of the position of the door in relation to the car body, adjustment of the position of the door, and finally attachment of the door.

If desired, additional information may be derived by analyzing the camera images. Thus, for example, the image of the camera C1 of the region CF1 in Figure 9 can be used also for determining the position in the vertical direction of the front door in relation to the rear door. The upper edges of the doors appear as contours in the image, and the difference in height between these contour lines can be determined, in a manner known per se, by analysis of the image.

June 4, 1986
21 741 PE
**0205175**

# C L A I M S

1. Method for determining the position of an object (1) in connection with robot equipment, c h a r a c t e r i z e d in

that at least one camera (C; C1-C4), supported by the robot and arranged to provide a two-dimensional image (18) of a region (CF1) of the surface of the object, is guided by the control means of the robot into a measuring position ($P_S$),

that with the aid of a light source (14, 15) mechanically connected to the camera, a pattern (17; 20) is projected optically on the surface of the object within said region (CF1), whereby the direction of the emitted light makes an angle ($\alpha$) with the optical axis (O-O) of the camera,

that on the basis of the position of the projected pattern in the image (18) taken by the camera, a measure ($z_1$) is calculated of the position of the object in a first direction which is substantially parallel to the optical axis (O-O) of the camera (C), and

that on the basis of the position in the image (18) of a characteristic part (2) of the object, a measure ($x_1$) is calculated of the position of said characteristic part in a second direction which makes an angle with the optical axis of the camera.

2. Method according to claim 1, c h a r a c t e r i z e d in that the projected pattern comprises a line and the position of the pattern in the image is determined in a direction which makes an angle with the line.

3. Method according to claim 2, c h a r a c t e r i z e d in that the projected line is a straight line.

June 4, 1986
21 741 PE
0205175

4. Method according to any of the preceding claims, c h a r a c t e r i z e d  in that on the basis of the position in the image of a distortion (21) of the projected pattern, caused by the characteristic part of the object, the position ($x_1$) of the characteristic part is determined.

5. Method according to claim 2 and 4,  c h a r a c t e r i z e d  in that  the position ($x_1$) in the image of said distortion (21) is determined in a direction which is substantially parallel to the projected line (17, 20).

6. Method according to claim 2 and 4,  c h a r a c t e r i z e d  in that said distortion consists of a corner or break point (21) in the image of the projected line.

7. Method according to any of the preceding claims, c h a r a c t e r i z e d  in that a measure of the position of the characteristic part (31, 32) is formed on the basis of the position in the image of a borderline (31', 32'), caused by said part, between two regions (e.g. 30', 33') having different luminance.

8. Method according to claim 7,  c h a r a c t e r i z e d in that the position of the borderline in the image ($\Delta x$) is determined in a direction which is substantially perpendicular to said borderline.

9. Method according to any of the preceding claims for determining the relative distance between two objects in a direction which is parallel to the optical axis of the camera,  c h a r a c t e r i z e d  in that said pattern is projected on both objects and the displacement ($\Delta z$) between the images (20', 20" Figure 10b) of the parts of the pattern, projected on the objects, is determined and constitutes a measure of the relative distance.

10. Method according to claim 7 for determining the width ($\Delta$x) of a gap (33) between two objects (1, 30) located adjacent to each other, c h a r a c t e r i z e d  in that the area is determined by part of the image of the gap, with a predetermined length (h) in the direction of the gap, and on the basis of the area a measure ($\Delta$x) of the width of the gap is determined.

11. Method according to any of the preceding claims, c h a-r a c t e r i z e d  in that a plurality of determinations of the position of the object are made at different points ($P_1$-$P_4$) on the object.

12. Method according to claim 11, for determining the position of an object which has a plurality of substantially straight edges, c h a r a c t e r i z e d  in that each measuring point is located at an edge and that, at each measuring point, said second direction is substantially perpendicular to the edge.

13. Method according to any of the preceding claims for installing a part (3) on the object (1), c h a r a c t e r-i z e d  in that the robot is first guided to a collect position ($P_h$) for collecting the part, that the robot then is guided into a measuring position ($P_S$), where a determination of the position of the object is made, and that on the basis thereof a calculation is made of the position ($P_m$) to be assumed by the robot to accurately install said part, whereafter the robot is guided into this position.

14.Device in connection with robot equipment for carrying out the method according to any of the preceding claims, c h a r a c t e r i z e d  in

21 741 PE

0205175

that it comprises at least one camera (CF1) supported by the robot and arranged to provide a two-dimensional image of a region (CF1) of the surface of the object,

that a light source (14, 15) is mechanically connected to the camera and arranged to project a pattern (17) on the surface of the object within said region, the emitted light having a direction making an angle ($\alpha$) with the optical axis (O-O) of the camera,

that distance-determining means (PA) are connected to the camera and are arranged, on the basis of the position in the image ($z_1$) of the projected pattern, to determine the distance between the camera and the object in a first direction which is substantially parallel to the optical axis of the camera,

and that position-determining means (PA) are connected to the camera and are arranged, on the basis of the position in the image ($x_1$) of a characteristic part of the object (21), to determine a measure of the position of said part in a second direction making an angle with the optical axis of the camera.

15. Device according to claim 14, c h a r a c t e r i z e d in that the measuring means comprise a plurality of cameras (C1-C4) supported by the robot for simultaneous determination of the position of a plurality of points ($P_1$-$P_4$) on the object.

16. Device according to claim 15, c h a r a c t e r i z e d in that the cameras are mechanically connected to a work tool (9) fixed to the robot hand.

June 4, 1986
21 741 PE

0205175

*FIG.1*

*FIG.2*

June 4, 1986
21 741 IE

0205175

FIG.3

FIG.4

June 4, 198
21 741 PE

0205175

FIG.5a

FIG.5b

FIG.6

0205175

FIG.8

START

$\rightarrow P_h$

AG

$\rightarrow P_s$

MC

$\rightarrow P_m$

DG

$\rightarrow P_u$

FIG.7

C1

$b_i$

$c_i$

$a_i$

$X_r$

$Z_r$

$P_c$

$Y_r$

9

FIG.9

1

CF1  CF2  30  CF3

*FIG. 10a*

*FIG. 10b*

June 4, 1986
21 741 PE
0205175

FIG.11